# EUROPEAN PATENT SPECIFICATION

(11) **EP 3 069 031 B1**
(45) Date of publication and mention of the grant of the patent: **04.10.2017**
(21) Application number: 14759085.5
(22) Date of filing: 21.08.2014
(51) Int. Cl.: F16B 13/06

(54) **EXPANDING WALL ANCHOR AND USE FOR FIXING A COMPONENT TO A SUPPORT MATERIAL**
DEHNBARER MAUERANKER UND VERWENDUNG ZUR BEFESTIGUNG EINES BAUTEILS AN EINEM TRÄGERMATERIAL
ANCRE DE PAROI DILATABLE ET UTILISATION POUR FIXER UN ÉLÉMENT À UN MATÉRIAU DE SUPPORT

(30) Priority: 13.11.2013 FR 1361072
(43) Date of publication of application: 21.09.2016
(73) Proprietor: Illinois Tool Works Inc., Glenview, IL 60025 (US)
(72) Inventor: POURTIER, Fabrice, F-26800 Portes-les Valence (FR)
(74) Representative: Gevers & Orès
(86) International application number: PCT/US2014/052199
(87) International publication number: WO 2015/073085

(56) References cited:
- DE-A1- 3 620 573
- DE-A1- 10 105 407
- SU-A1- 1 479 735
- US-A- 5 193 957

## Description

### TECHNICAL FIELD

The invention relates to an expanding wall anchor and its use for fixing a component to a support material, particularly a support material liable to be subjected to seismic loadings.

### PRIOR ART

Typically, an expanding wall anchor comprises i) a threaded longitudinal body formed as a single piece with an expansion cone at one of its ends, this cone being connected to the rest of the body by a cylindrical portion of diameter smaller than the nominal diameter of the body, and ii) an expanding sleeve mounted around the said cylindrical portion of the body and through which the expansion cone is intended to be moved in order to deform the sleeve and anchor the wall anchor in a hole in a support material.

Documents US-A1-2010/0104393, WO-A1-2012/120488 and US 5 193 957 A describe wall anchors of this type.

A wall anchor of this type is generally used in a concrete support after a receiving hole has been drilled therein with the nominal diameter of the body. The end part of the wall anchor comprising the expansion cone and bearing the expanding sleeve is forcibly engaged in this hole, for example by striking the wall anchor with a hammer. The component to be fixed is attached to the support material in such a way that the threaded part of the wall anchor passes through the component to be fixed, this threaded part accepting a nut that clamps the component against the support material. This clamping causes the body to undergo an axial translational movement with respect to the sleeve of the wall anchor, towards the outside end of the hole. The cone of the body therefore collaborates with the sleeve and forces it to expand, thus anchoring the sleeve in the support material and retaining the wall anchor with respect to the support material.

After the sleeve has been expanded, the tensile strength of this type of wall anchor is generally dependent on the cross section of the cylindrical portion of the body housing the sleeve, which is the smallest-diameter portion of the body of the wall anchor (as long as the sleeve holds fast in the support material and as long as the latter is able to withstand the stresses generated by the fixing).

However, regulations in this area are now evolving towards products that have been type tested for seismic loadings. This results in increasingly strict product testing conditions. In particular, the products have to undergo dynamic testing in cracked concrete the crack widths of which increase with each new seismic condition. The known products which were able to meet the earlier type testing certification conditions generally experience a drop in their performance, or even sometimes are no longer able to function at all under seismic loadings.

These changes to the type testing certification conditions, particularly the increase in the width of the cracks in the support material accepting this type of wall anchor during the certification testing, mean that the sleeve has greater difficulty holding fast in the support material, or suitably holding the body of the wall anchor when the latter experiences seismic loadings.

The present invention proposes a simple, effective and economical solution to this problem.

### SUMMARY OF THE INVENTION

The invention thus proposes an expanding wall anchor, comprising:
i) a threaded longitudinal body formed as a single piece with an expansion cone at one of its ends, this cone being connected to the rest of the body by a cylindrical portion of diameter d1 smaller than the nominal diameter D of the body, and
ii) an expanding sleeve of thickness e mounted around the said cylindrical portion of the body and through which the expansion cone is intended to be moved in order to deform the sleeve and anchor the wall anchor in a hole in a support material,
characterized in that the ratio d1/D is greater than or equal to 60% and the ratio e/d1 is greater than or equal to 22%.

In the present application, d1 is the (outside) diameter of the cylindrical portion of the body of the wall anchor, around which the sleeve is mounted. D is the nominal diameter of the body of the wall anchor, namely the maximum (outside) diameter of the body. e is the thickness of the sleeve and more specifically the thickness of material of this sleeve (which is equal to the thickness of the metal sheet used to produce the sleeve when the sleeve is made from such sheet metal). It is conceivable for the thickness of the sleeve not to be perfectly constant, particularly when that end of the sleeve that is situated at the expansion cone end is thinner. It is also conceivable for this thickness e to vary because of the presence of anchoring lugs on the external surface of the sleeve or of local slits in the sleeve. The thickness e of the sleeve can therefore be considered to be measured here some distance from its ends and away from any zones of the sleeve that have lugs or slits. The sleeve may have an outside diameter d2 substantially equal to the nominal diameter D. As indicated in the foregoing, this diameter d2 is preferably measured some distance from the ends of the sleeve and away from such zones as have lugs or slits.

The applicant company has sought to optimize dimensional parameters of the wall anchor and has discovered that a ratio e/d1 (the ratio of the thickness of the sleeve to the diameter of the cylindrical portion of the body on which the sleeve is mounted) greater than or equal to 22% unexpectedly makes it possible to achieve very good results in terms of the mechanical and vibratory performance of the wall anchor under seismic loadings, even when anchored in a crack that is relatively wide. The ratio d1/D is greater than or equal to 60%, i.e. the diameter d1 is greater than 0.6D, making it possible to give the wall anchor sufficient mechanical strength because, as explained in the foregoing, the tensile strength of the wall anchor is generally dependent on the cross section of this smallest-section portion of the body (it being possible for D to be comprised between 6 and 30 mm and, for example, measuring 8, 10, 12 or 16 mm). From a given value of d1, it is therefore possible to deduce the value of the sleeve thickness e that will give the wall anchor the desired properties. For a wall anchor of given nominal diameter D, this wall anchor will have a sleeve the thickness e of which will be greater than the thicknesses of the sleeves of the wall anchors of the prior art (in which the e/d1 ratios are markedly below 22%). Increasing the thickness e of the sleeve allows it to be made less sensitive to the increase in the width of the cracks and allows it to hold more fast under seismic loadings. In the aforementioned instance in which the sleeve is made from sheet metal, that amounts to using a thicker metal sheet from which to make the sleeve of the wall anchor according to the invention.

The ratio e/d1 may be greater than or equal to 23, 24 or 25%.

This ratio e/d1 is preferably less than 35%, or even 34, 33, 32, 31 or 30%. Specifically, in order to guarantee a sufficient resistive cross section with the steels commonly used by those skilled in the art to make the body of this type of wall anchor, the ratio e/d1 preferably has not to be too high, particularly in the case of small-diameter wall anchors which are more sensitive to body breakages.

The diameter d1 may be comprised between 3 and 15 mm, preferably between 4 and 13 mm, and more preferably between 5 and 12 mm. The thickness e may be comprised between 0.7 and 3.5 mm, preferably between 0.9 and 3 mm, and more preferably between 1 and 2.5 mm.

The expansion cone of the wall anchor may have an angle α greater than or equal to 25, 26, and preferably 27°. This angle α may be less than or equal to 35° and preferably less than or equal to 30°.

The sleeve may have an end, situated at the expansion cone end, that has a conicity obtained for example by an entry chamfer.

The applicant company has sought to improve the performance of its wall anchor still further in cracked concrete under seismic loading. It has thus had the idea of significantly increasing the angle α of the expansion cone by comparison with the values commonly employed in the current state of the art. This angle α is actually generally less than or equal to 20° for wall anchors intended for non-cracked concrete, and of the order of 20 to 22° for those intended to work in cracked concrete.

A large angle α generates significant stress at the contact between the sleeve and the expansion cone of the body. This stress, if excessively high, has the effect of causing the sleeve to seize on the body, destroying the contact surface, which is detrimental to the overall operation of the wall anchor under such conditions. Sometimes the person skilled in the art uses an antifriction coating at this point of contact, in order to push back the limits of seizure described above. However, this coating has the disadvantage of reducing the holding performance of the wall anchor under the conditions described above. The applicant company, seeking to obtain superior performance despite the new seismic conditions, has raised the value of this angle α to at least 27°, which goes against the technical preconceptions in this art. Astonishingly, recourse to these high angle α values has made it possible to improve the operation and hold fast ability of the wall anchors. Increasing the value of the angle α without seizure has in fact between made easier by the increase in the thickness e of the sleeve which allows this sleeve to withstand more severe operating conditions and makes it possible to push back the permissible limits at the sleeve/expansion cone contact region. The combination of these parameters has allowed the applicant company to produce wall anchors that function perfectly under seismic loading in cracked concrete while at the same time improving their ultimate strength, and as a result, their maximum safe working load.

The sleeve may have a length representing less than 25%, and for example less than 20%, of that of the body.

The cone may have a maximum diameter d3 substantially equal to the nominal diameter D.

The cylindrical portion of diameter d1 may be connected by a cylindrical portion of nominal diameter D to a threaded part of the body.

The present invention also relates to a use of a wall anchor as described hereinabove for fixing an object to a support material, particularly a support material liable to be subjected to seismic loadings.

### BRIEF DESCRIPTION OF THE FIGURES

The invention will be better understood and further details, features and advantages of the present invention will become more clearly apparent from reading the following description, given by way of nonlimiting example with reference to the attached drawings, in which:
- Figure 1 is a schematic view of an expanding wall anchor according to the invention; and
- Figure 2 is another schematic view, in this instance an exploded view, of the wall anchor of Figure 1; and
- Figure 3 is a schematic view in cross section of a support material in a hole of which an expanding wall anchor according to the invention is anchored.

### DETAILED DESCRIPTION

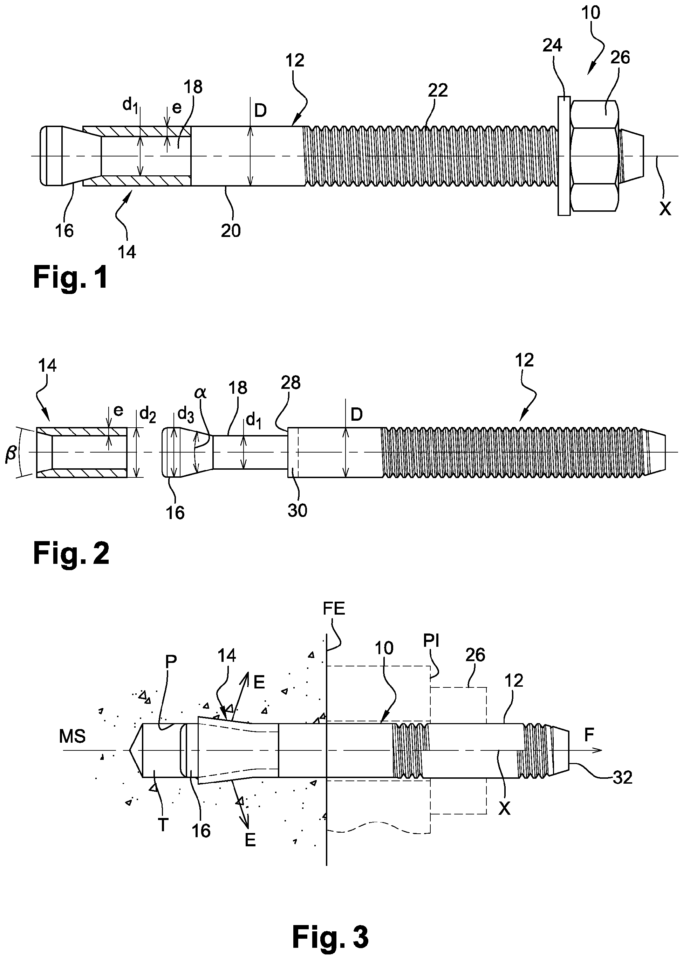

The wall anchor 10 of Figure 1, intended for fixing a component to a support material, comprises a longitudinal body 12 of axis X and an expanding sleeve 14 mounted coaxially around the body.

The body 12 essentially comprises an expansion cone 16 of angle α and of maximum diameter d2 (Figure 2), a cylindrical portion 18 of diameter d1, a cylindrical portion 20 of diameter D, and a threaded part 22 which is able to accept a washer 24 and a nut 26.

The expansion cone 16 is situated at one end of the body 12 and is connected by the portion 18 of diameter d1 to the portion 20 of diameter D. d1 is less than D which is the nominal diameter of the body 12 and which is substantially equal to the receiving or anchor hole bored in the support material. Thus, the portion 18 defines an annular groove between the cone 16 and the rest of the body 12.

The portion 20 extends between the portion 18 and the threaded part 22 which generally has a length greater than the combined lengths of the cone 16 and of the portions 18, 20, along the axis X.

The body 12, comprising the cone 16, the portions 18, 20 and the threaded part 22, is formed as a single piece, generally of a hard and strong metal alloy (such as a steel). In theory, it is of solid cross section over its entire length.

The region of connection between the cylindrical portions 18, 20 may comprise an external radial shoulder 28 (Figure 2) which is notably intended to act as an axial end stop for the sleeve 14 when the wall anchor 10 is being inserted into the support material. If this shoulder 28 is formed of an annular collar 30, this collar may be considered to define the nominal diameter D of the body 12.

The expanding sleeve 14 is mounted around the portion 18, i.e. in the aforementioned groove of the body 12. The sleeve 14 has a thickness e and an outside diameter d2.

The sleeve 14 is preferably mounted with clearance, particularly radial clearance, on this portion so that it can move along it. The radial clearance on the radius is preferably comprised between 0.05 and 0.3 mm.

This sleeve 14 is obtained in the usual way from a flat sheet material blank (generally sheet metal blank), which is cut, bent, struck and/or rolled so that once mounted on the portion 18 of the body 12 it has the desired skirt shape with a longitudinal slit. The sleeve 14 may comprise projecting external lugs that anchor into the support material, the radially external ends of these lugs potentially being on a circumference centred on the axis X and the diameter of which is slightly greater than the nominal diameter D of the body.

The sleeve 14 is mounted around the portion 18 of the body by crimping such that the longitudinal edges of the sleeve face and are close to one another, with a relatively narrow slit separating them. Once crimped, the sleeve 14 is preferably able to move, within the extent of the functional clearance, axially and rotationally with respect to the body 12.

This expanding sleeve 14 is intended to have the expansion cone 16 of the body 12 pass partially through it so that once it has deformed it anchors in the wall of a receiving or anchor hole in a support material.

As Figures 1 and 2 show, the sleeve 14 may at its end situated at the same end as the cone 16 have an entry chamfer which gives this end a certain conicity, so that once it has been mounted around the portion 18 of the body, the sleeve 14 has a frustoconical shape that more or less complements that of the expansion cone 16 of the body.

According to the invention, the wall anchor 10 is dimensioned such that the ratio d1/D is greater than or equal to 60% and that the ratio e/d1 is greater than or equal to 22%. Moreover, the aforementioned angle α of the cone 16 of the wall anchor is preferably comprised between 27 and 30°, and preferably measures approximately 27°.

As far as the d1/D ratio is concerned, the minimum value of 60% amounts to expressing the depth of the annular groove defined by the portion 18 of the body. In order not to weaken the body, this groove has not to be too deep, as too deep a groove results in a small-section portion 16 which therefore has low mechanical strength. The following table sets out the minimum value of d1 for various values of the nominal diameter of the body of the wall anchor.

| Nominal diameter D (in mm) | Minimum value of d1 (in mm - for a d1/D ratio ≥ 0.6) |
|---|---|
| 6 | 3.6 |
| 8 | 4.8 |
| 10 | 6 |
| 12 | 7.2 |
| 16 | 9.6 |

The ratio e/d1 has a minimum value for guaranteeing the wall anchor good mechanical properties and, in particular, good ability to hold fast under seismic loadings.

The following table gives, by way of example, minimum values for the thickness e of the sleeve, which have been deduced from the d1 values from the previous table.

| Nominal diameter D (in mm) | Minimum value of d1 (in mm) | Minimum value of e (in mm - for an e/d1 ratio ≥ 0.22) |
|---|---|---|
| 6 | 3.6 | 0.792 |
| 8 | 4.8 | 1.056 |
| 10 | 6 | 1.32 |
| 12 | 7.2 | 1.584 |
| 16 | 9.6 | 2.112 |

Of course, the values of d1 and of e of the wall anchor according to the invention are dependent on the nominal diameter D of the wall anchor and on the aforementioned ratios d1/D and e/d1. The next table gives other examples of values of the thickness e for the same ratio d1/D (≥ 0.6) and for a e/d1 ratio greater than or equal to 25%.

| Nominal diameter (in mm) | Minimum value of d1 (in mm) | Minimum value of e (in mm - for an e/d1 ratio ≥ 0.25) |
|---|---|---|
| 6 | 3.6 | 0.9 |
| 8 | 4.8 | 1.2 |
| 10 | 6 | 1.5 |
| 12 | 7.2 | 1.8 |
| 16 | 9.6 | 2.4 |

Fitting the expanding wall anchor according to the invention into a support material does not present any difficulties and can be done usually in the following way, with reference to Figure 3.

Beforehand, a blind anchor or receiving hole T of diameter D is bored in the support material MS which is generally a hard material (concrete).

The depth of the hole is at least equal to the combined lengths of the cone 16, of the portion 18 and of at least part of the portion 20 (or of the collar 30).

The wall anchor 10 is introduced, expansion cone 16 end first, into the hole T using a tool, such as a hammer, acting on the transverse face 32 of the body 12, at the opposite end from the cone 16. As the cone 16 is driven into the hole T the sleeve 14, driven axially by the shoulder 28 or the collar 30 of the body, is introduced at the same time.

The wall anchor 10 is therefore introduced into the hole T, with the expansion cone 16 ready to deform the sleeve 14 to anchor it completely in the wall P of the hole.

To achieve that, axial tension is applied in the direction of the arrow F to the body, towards the outside end of the hole T, which tension is obtained by the clamping nut 26, depicted in chain line in Figure 3, screwed onto the threaded part 22 of the body and used to attach a component PI, likewise depicted in chain line and mounted around the body 12 so that it sits against the face FE of the support material MS.

As the nut 26 is tightened, the expansion cone 16 is pulled and enters the sleeve 14, which sleeve, because of its frustoconical shape which is the reverse of that of the cone, experiences an expansion right from the start of the tensile force applied by the retreating cone 16 and engages in the wall P of the hole. Thus, the sleeve 14 is immediately immobilized axially in position, preventing it from riding up in the hole.

As the expansion cone 16 gradually penetrates the sleeve 14, as a result of the tightening of the nut 26, to reach the final position illustrated in Figure 3, for which the cone is appreciably engaged in the sleeve, the sleeve 14 undergoes an expansion such that it is forced to penetrate (arrows E) the wall P of the hole T so that the sleeve 14 is perfectly anchored in the support material MS.

The wall anchor 10 is then operational, fully immobilized by the tightening of the nut 26 that attaches the component PI to the support material MS.

### EXAMPLE

The description that follows contains a comparative example to illustrate the foregoing.

We have compared a product according to the invention (product A) that meets all of the requirements stipulated for cracked concrete and seismic loadings against a product of the prior art that meets only the requirements stipulated for cracked concrete without seismic loadings (product B) and against a third product designed exclusively for non-cracked concrete (product C). The three wall anchors compared have the same nominal diameter, in this instance 12 mm (M12), and were set at identical anchoring depths into concretes of identical strengths. The various components of these wall anchors are made of comparable steels commonly used by those skilled in the art. The only appreciable differences are their ratio e/d1 and their angle α as defined above. The reference wall anchor is the wall anchor according to the invention (product A) which works under all the conditions and for which we consider the ultimate strength (RLU) (or "design resistance") to be 100%.

The table below summarizes the results and parameters of our example.

| Product | e/d1 | α | RLU | Does it work in cracked concrete | Does it work in concrete with seismic loading |
|---|---|---|---|---|---|
| A | 25.6% | 27 | 100% | YES | YES |
| B | 17.4% | 20 | 100% | NO | NO |
| B | 17.4% | 20 | 75% | YES | NO |
| C | 17.4% | 16 | 100% | NO | NO |
| C | 17.4% | 16 | 56% | YES | NO |

Product A has an e/d1 ratio greater than 22%, in this instance of 25.6%, an angle α equal to 27° and works in all conditions. This is our reference.

Product B designed for cracked concrete but not for seismic loadings has an e/d1 ratio of less than 22%, in this instance of 17.4%, and an angle α less than 27°, in this instance of 20°. Its performance in cracked concrete is only 75% of the RLU of product A. If product B is loaded to achieve 100% of the RLU of product A, it no longer works in cracked concrete. This product B is not designed for seismic loading.

Product C designed solely for non-cracked concrete has an e/d1 ratio of less than 22%, in this instance of 17.4%, and an angle α less than 27°, in this instance of 16°. We reduced its RLU progressively in an attempt to make it work in cracked concrete but under lighter load. At the end of this exercise, the RLU of product C that allowed it to function in cracked concrete was only 56% of the RLU of product A.

This example clearly demonstrates the benefit of the invention and the significance of the claimed parameters in the performance of products in relation to the prior art.

## Claims

1. Expanding wall anchor (10), comprising:
i) a threaded longitudinal body (12) formed as a single piece with an expansion cone (16) at one of its ends, this cone being connected to the rest of the body by a cylindrical portion (18) of diameter d1 smaller than the nominal diameter D of the body, and
ii) an expanding sleeve (14) of thickness e mounted around the said cylindrical portion of the body and through which the expansion cone is intended to be moved in order to deform the sleeve and anchor the wall anchor in a hole in a support material,
**characterized in that** the ratio d1/D is greater than or equal to 60% and the ratio e/d1 is greater than or equal to 22%.

2. Wall anchor (10) according to Claim 1, **characterized in that** the ratio e/d1 is less than 35%.

3. Wall anchor (10) according to Claim 1 or 2, **characterized in that** the expansion cone (16) has an angle α greater than or equal to 25°.

4. Wall anchor (10) according to one of the preceding claims, **characterized in that** the expansion cone (16) has an angle α greater than or equal to 26°, and preferably greater than or equal to 27°.

5. Wall anchor (10) according to one of the preceding claims, **characterized in that** the expansion cone (16) has an angle α less than or equal to 35°.

6. Wall anchor (10) according to one of the preceding claims, **characterized in that** the expansion cone (16) has an angle α less than or equal to 30°.

7. Wall anchor (10) according to one of the preceding claims, **characterized in that** the sleeve (14) has an outside diameter d2 substantially equal to the nominal diameter D.

8. Wall anchor (10) according to one of the preceding claims, **characterized in that** the nominal diameter D is comprised between 6 and 30 mm, and measures, for example, 8, 10, 12 or 16 mm.

9. Wall anchor (10) according to one of the preceding claims, **characterized in that** the diameter d1 is comprised between 3 and 15 mm.

10. Wall anchor (10) according to one of the preceding claims, **characterized in that** the thickness e is comprised between 0.7 and 3.5 mm.

11. Wall anchor (10) according to one of the preceding claims, **characterized in that** the sleeve has a length representing less than 25% of that of the body.

12. Wall anchor (10) according to Claim 11, **characterized in that** the sleeve has a length representing less than 20% of that of the body.

13. Wall anchor (10) according to one of the preceding claims, **characterized in that** the cone has a maximum diameter d3 substantially equal to the nominal diameter D.

14. Wall anchor (10) according to one of the preceding claims, **characterized in that** the cylindrical portion (18) of diameter d1 is connected by a cylindrical portion (20) of nominal diameter D to a threaded part (22) of the body (12).

15. Use of a wall anchor (10) according to one of the preceding claims for fixing an object to a support material, particularly a support material liable to be subjected to seismic loadings.

## Patentansprüche

1. Dehnbarer Maueranker (10), umfassend:
i) einen mit einem Gewinde versehenen Längskörper (12), der als ein einzelnes Stück mit einem Spreizkonus (16) an einem seiner Enden ausgebildet ist, wobei dieser Konus durch einen zylindrischen Abschnitt (18) mit einem Durchmesser d1, der kleiner ist als der Nenndurchmesser D des Körpers, mit dem Rest des Körpers verbunden ist, und
ii) eine Spreizhülse (14) mit einer Dicke e, die um den zylindrischen Abschnitt des Körpers herum angebracht ist und durch die der Spreizkonus bewegt werden soll, um die Hülse zu verformen und den Maueranker in einem Loch in einem Trägermaterial zu verankern,
**dadurch gekennzeichnet, dass** das Verhältnis d1/D größer oder gleich 60% und das Verhältnis e/d1 größer oder gleich 22% ist.

2. Maueranker (10) nach Anspruch 1, **dadurch gekennzeichnet, dass** das Verhältnis e/d1 kleiner als 35% ist.

3. Maueranker (10) nach Anspruch 1 oder 2, **dadurch gekennzeichnet, dass** der Spreizkonus (16) einen Winkel α aufweist, der größer oder gleich 25° ist.

4. Maueranker (10) nach einem der vorhergehenden Ansprüche, **dadurch gekennzeichnet, dass** der Spreizkonus (16) einen Winkel α aufweist, der größer oder gleich 26°, und vorzugsweise größer oder gleich 27° ist.

5. Maueranker (10) nach einem der vorhergehenden Ansprüche, **dadurch gekennzeichnet, dass** der Spreizkonus (16) einen Winkel α aufweist, der kleiner oder gleich 35° ist.

6. Maueranker (10) nach einem der vorhergehenden Ansprüche, **dadurch gekennzeichnet, dass** der Spreizkonus (16) einen Winkel α aufweist, der kleiner oder gleich 30° ist.

7. Maueranker (10) nach einem der vorhergehenden Ansprüche, **dadurch gekennzeichnet, dass** die Hülse (14) einen Außendurchmesser d2 aufweist, der im Wesentlichen gleich dem Nenndurchmesser D ist.

8. Maueranker (10) nach einem der vorhergehenden Ansprüche, **dadurch gekennzeichnet, dass** der Nenndurchmesser D zwischen 6 und 30 mm beträgt und beispielsweise 8, 10, 12 oder 16 mm misst.

9. Maueranker (10) nach einem der vorhergehenden Ansprüche, **dadurch gekennzeichnet, dass** der Durchmesser d1 zwischen 3 und 15 mm beträgt.

10. Maueranker (10) nach einem der vorhergehenden Ansprüche, **dadurch gekennzeichnet, dass** die Dicke e zwischen 0,7 und 3,5 mm beträgt.

11. Maueranker (10) nach einem der vorhergehenden Ansprüche, **dadurch gekennzeichnet, dass** die Hülse eine Länge aufweist, die weniger als 25% von jener des Körpers darstellt.

12. Maueranker (10) nach Anspruch 11, **dadurch gekennzeichnet, dass** die Hülse eine Länge aufweist, die weniger als 20% von jener des Körpers darstellt.

13. Maueranker (10) nach einem der vorhergehenden Ansprüche, **dadurch gekennzeichnet, dass** der Konus einen Maximaldurchmesser d3 aufweist, der im Wesentlichen gleich dem Nenndurchmesser D ist.

14. Maueranker (10) nach einem der vorhergehenden Ansprüche, **dadurch gekennzeichnet, dass** der zylindrische Abschnitt (18) mit dem Durchmesser d1 durch einen zylindrischen Abschnitt (20) mit dem Nenndurchmesser D mit einem Gewindeteil (22) des Körpers (12) verbunden ist.

15. Verwendung eines Mauerankers (10) nach einem der vorhergehenden Ansprüche zur Befestigung eines Gegenstands an einem Trägermaterial, insbesondere einem Trägermaterial, das seismischen Belastungen ausgesetzt sein kann.

## Revendications

1. Cheville (10) à douille expansible, comportant :
i) un corps longitudinal (12) fileté formé d'une seule pièce avec un cône d'expansion (16) à l'une de ses extrémités, ce cône étant relié au reste du corps par une portion cylindrique (18) de diamètre d1 inférieur au diamètre nominal D du corps, et
ii) une douille (14) expansible d'épaisseur e montée autour de ladite portion cylindrique du corps et à travers laquelle le cône d'expansion est destiné à être déplacé pour déformer la douille et ancrer la cheville dans un trou d'un matériau support,
**caractérisée en ce que** le rapport d1/D est supérieur ou égal à 60% et le rapport e/d1 est supérieur ou égal à 22%.

2. Cheville (10) selon la revendication 1, **caractérisée en ce que** le rapport e/d1 est inférieur à 35%.

3. Cheville (10) selon la revendication 1 ou 2, **caractérisée en ce que** le cône d'expansion (16) a un angle α supérieur ou égal à 25°.

4. Cheville (10) selon l'une des revendications précédentes, **caractérisée en ce que** le cône d'expansion (16) a un angle α supérieur ou égal à 26°, et de préférence à 27°.

5. Cheville (10) selon l'une des revendications précédentes, **caractérisée en ce que** le cône d'expansion (16) a un angle α inférieur ou égal à 35°.

6. Cheville (10) selon l'une des revendications précédentes, **caractérisée en ce que** le cône d'expansion (16) a un angle α inférieur ou égal à 30°.

7. Cheville (10) selon l'une des revendications précédentes, **caractérisée en ce que** la douille (14) a un diamètre externe d2 sensiblement égal au diamètre nominal D.

8. Cheville (10) selon l'une des revendications précédentes, **caractérisée en ce que** le diamètre nominal D est compris entre 6 et 30mm, et est par exemple de 8, 10, 12 ou 16 mm.

9. Cheville (10) selon l'une des revendications précédentes, **caractérisée en ce que** le diamètre d1 est compris entre 3 et 15mm.

10. Cheville (10) selon l'une des revendications précédentes, **caractérisée en ce que** l'épaisseur e est comprise entre 0,7 et 3,5mm.

11. Cheville (10) selon l'une des revendications précédentes, **caractérisée en ce que** la douille a une longueur représentant moins de 25% de celle du corps.

12. Cheville (10) selon la revendication 11, **caractérisée en ce que** la douille a une longueur représentant moins de 20% de celle du corps.

13. Cheville (10) selon l'une des revendications précédentes, **caractérisée en ce que** le cône a un diamètre maximal d3 sensiblement égal au diamètre nominal D.

14. Cheville (10) selon l'une des revendications précédentes, **caractérisée en ce que** la portion cylindrique (18) de diamètre d1 est reliée par une portion cylindrique (20) de diamètre nominal D à une partie filetée (22) du corps (12).

15. Utilisation d'une cheville (10) selon l'une des revendications précédentes pour la fixation d'un objet à un matériau support, en particulier un matériau support susceptible d'être soumis à des sollicitations sismiques.
